(19) Europäisches Patentamt
European Patent Office
Office européen des brevets

(11) **EP 3 702 977 A2**

(12) **EUROPEAN PATENT APPLICATION**

(43) Date of publication:
**02.09.2020 Bulletin 2020/36**

(51) Int Cl.:
**G06N 20/00** (2019.01) **G06Q 30/02** (2012.01)

(21) Application number: **20156872.2**

(22) Date of filing: **12.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2019 JP 2019036945**

(71) Applicant: **FUJITSU LIMITED**
**Kanagawa 211-8588 (JP)**

(72) Inventors:
• **Goto, Keisuke**
**Kanagawa, 211-8588 (JP)**

• **Asai, Tatsuya**
**Kanagawa, 211-8588 (JP)**
• **Iwashita, Hiroaki**
**Kanagawa, 211-8588 (JP)**
• **Ohori, Kotaro**
**Kanagawa, 211-8588 (JP)**
• **Shiota, Yoshinobu**
**Tokyo, 105-0022 (JP)**

(74) Representative: **Hoffmann Eitle**
**Patent- und Rechtsanwälte PartmbB**
**Arabellastraße 30**
**81925 München (DE)**

(54) **ALLOCATION PROGRAM, EXTRACTION PROGRAM, ALLOCATION METHOD, EXTRACTION METHOD, ALLOCATION APPARATUS, AND EXTRACTION APPARATUS**

(57) An allocation apparatus (20) is configured to perform, by using a part of data including an objective variable and one or more explanatory variables corresponding to the objective variable as training data, training of a model that predicts the objective variable from the explanatory variables of the data. The allocation apparatus (20) is configured to classify test data obtained by excluding the training data from the data into a group according to a classification condition regarding at least a part of the explanatory variables of the data. The allocation apparatus (20) is configured to predict the objective variable from the explanatory variables of the test data using the trained model for each of groups. The allocation apparatus (20) is configured to calculate a predetermined resource amount to be allocated to each of the groups based on the objective variable for each of the groups predicted at the predicting.

FIG.1

EP 3 702 977 A2

**Description**

FIELD

The embodiments discussed herein are related to an allocation program, an extraction program, an allocation method, an extraction method, an allocation apparatus, and an extraction apparatus.

BACKGROUND

Heretofore, technologies for optimizing advertisement placement have been known. Particularly, in digital marketing, measures for the optimization are sometimes planned or implemented based on an analysis result of log data.
Japanese Laid-open Patent Publication No. 2015-028732
However, the above technologies have a problem that, in some cases, it is difficult to planning and implement the measures more efficiently. For example, assume a case where an importance degree of each item value of log data is calculated by a technique such as logistic regression, and an analysis is further conducted by combining a plurality of the item values based on the importance degrees. In this case, the combination number will be enormous. Thus, it is difficult to conduct the analysis with all the combinations taken into account using a related technology. Accordingly, the related technologies sometimes have a difficulty to lead the analysis result of log data into more efficient planning and implementation of measures.
Accordingly, it is an object in one aspect of an embodiment of the invention to provide an allocation program, an extraction program, an allocation method, an extraction method, an allocation apparatus, and an extraction apparatus to make the planning and implementation of measures more efficient.

SUMMARY

According to an aspect of the embodiments, an allocation program causes a computer (20) to execute a process including: performing, by using a part of data including an objective variable and one or more explanatory variables corresponding to the objective variable as training data, training of a model that predicts the objective variable from the explanatory variables of the data; classifying test data obtained by excluding the training data from the data into a group according to a classification condition regarding at least a part of the explanatory variables of the data; predicting the objective variable from the explanatory variables of the test data using the trained model for each of groups by which classification has been performed at the classifying; and calculating a predetermined resource amount to be allocated to each of the groups based on the objective variable for each of the groups predicted at the predicting.

BRIEF DESCRIPTION OF DRAWINGS

FIG. 1 is a diagram illustrating an example of a functional configuration of an extraction apparatus according to a first embodiment;
FIG. 2 is a diagram illustrating an example of log data;
FIG. 3 is a diagram illustrating an example of information on hypothesis;
FIG. 4 is a diagram illustrating an example of information on variable;
FIG. 5 is an explanatory diagram explaining a training technique;
FIG. 6 is an explanatory diagram explaining the training technique;
FIG. 7 is an explanatory diagram explaining a relation between variables and data;
FIG. 8 is an explanatory diagram explaining generation of hypotheses;
FIG. 9 is an explanatory diagram explaining the generation of hypotheses;
FIG. 10 is an explanatory diagram explaining the generation of hypotheses;
FIG. 11 is an explanatory diagram illustrating an example of the generated hypotheses;
FIG. 12 is an explanatory diagram explaining calculation of an importance degree by logistic regression;
FIG. 13 is a flow chart illustrating a flow of an extraction process according to the first embodiment;
FIG. 14 is a diagram illustrating an example of a functional configuration of an extraction apparatus according to a second embodiment;
FIG. 15 is a diagram illustrating an example of log data;
FIG. 16 is a diagram illustrating an example of information on hypothesis;
FIG. 17 is a diagram illustrating an example of information on group;
FIG. 18 is an explanatory diagram explaining displayed hypotheses of each group;

FIG. 19 is a flow chart illustrating a flow of an extraction process according to the second embodiment;

FIG. 20 is an explanatory diagram explaining a cycle of budget allocation;

FIG. 21 is a diagram illustrating an example of a functional configuration of an allocation apparatus according to a third embodiment;

FIG. 22 is an explanatory diagram explaining optimization of budget allocation;

FIG. 23 is an explanatory diagram explaining classification of data;

FIG. 24 is an explanatory diagram explaining a CV score;

FIG. 25 is an explanatory diagram explaining ranking;

FIG. 26 is a flow chart illustrating a flow of an allocation process according to the third embodiment; and

FIG. 27 is a diagram explaining a hardware configuration example.

DESCRIPTION OF EMBODIMENTS

Preferred embodiments will be explained with reference to accompanying drawings. Note that the embodiments will not limit the present invention Each embodiment may be combined appropriately without inconsistencies.

[a] First Embodiment

Functional Configuration

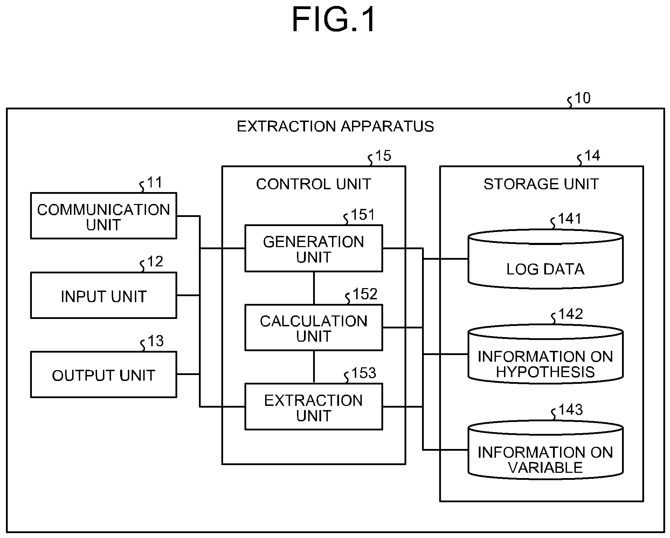

A functional configuration of an extraction apparatus according to a first embodiment will be described with reference to FIG. 1. FIG. 1 is a diagram illustrating an example of the functional configuration of the extraction apparatus according to the first embodiment. As illustrated in FIG. 1, an extraction apparatus 10 includes a communication unit 11, an input unit 12, an output unit 13, a storage unit 14, and a control unit 15.

The communication unit 11 is an interface to communicate data with another apparatus. For example, the communication unit 11 is a Network Interface Card (NIC) and communicates data via the Internet.

The input unit 12 is an apparatus with which a user inputs information. An example of the input unit 12 includes a mouse and a key board. The output unit 13 is a display that displays a screen, for example. The input unit 12 and the output unit 13 may be a touch panel display.

The storage unit 14 is an example of a storage apparatus that stores data, programs to be executed by the control unit 15, and the like. For example, the storage unit 14 is a hard disk, a memory, or the like. The storage unit 14 stores log data 141, information on hypothesis 142, and information on variable 143.

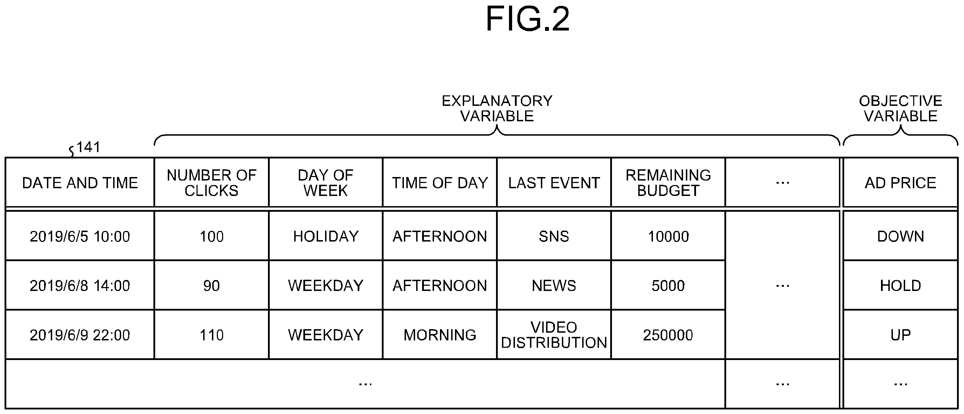

The log data 141 is data that has, as item values, an objective variable and a plurality of explanatory variables corresponding to the objective variable. FIG. 2 is a diagram illustrating an example of the log data. As illustrated in FIG. 2, the log data 141 has date and time as a key. As just described, the log data 141 has date and time as a key and may be time series data of which data further increases with a lapse of time.

In the first embodiment, it is assumed that the log data 141 is data that has been collected on a predetermined date and time, and associates information on an advertisement having been placed on the Web with measures having been implemented for the information.

In some cases, the log data 141 may be utilized as training data for training a model for deriving effective measures. Accordingly, the measures in the log data 141 may be measures planned by a skilled planner, for example. The log data 141 may also be data collected from the cases where the implemented measures have succeeded.

As illustrated in FIG. 2, the log data 141 includes "number of clicks", "day of week", "time of day", "last event", and "remaining budget" as the explanatory variables. The log data 141 further includes "ad price" as the objective variable. The objective variable "ad price" indicates whether the measures are intended for raising, maintaining, or lowering the advertisement price.

For example, the first line of FIG. 2 indicates that the information that, in the afternoon on a holiday, the number of clicks on a certain advertisement was 100 and the remaining budget of the advertisement was 10,000 yen was collected at 10:00 on 2019/6/5. The first line of FIG. 2 further indicates that measures of lowering the advertisement price was implemented for the advertisement.

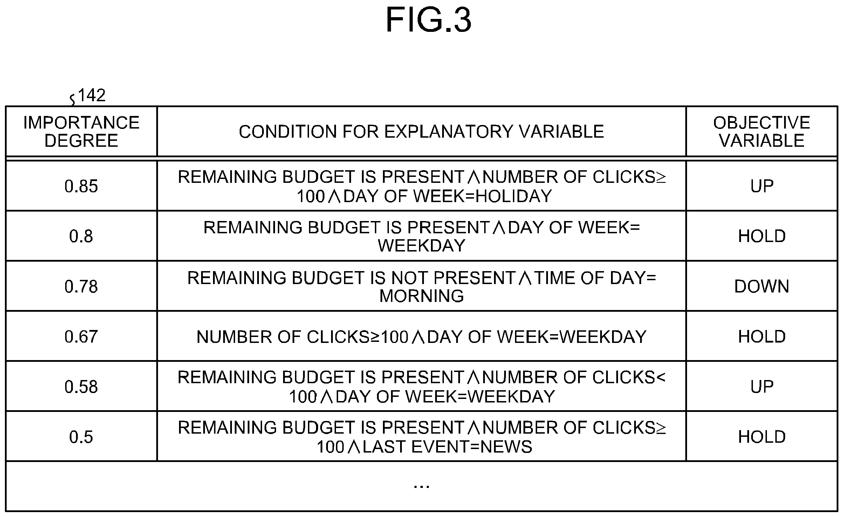

The information on hypothesis 142 is information that associates a combination of an objective variable and conditions regarding one or more explanatory variables corresponding to the objective variable with an importance degree. FIG. 3 is a diagram illustrating an example of the information on hypothesis. Hereinafter, a combination in the information on hypothesis 142 is sometimes referred to as a hypothesis. A method of calculating the importance degree will be described later.

For example, the first line of FIG. 3 indicates that the importance degree of the hypothesis "when remaining budget is PRESENT A number of clicks ≥ 100 A day of week = HOLIDAY, ad price is UP" is 0.85.

The hypothesis can be considered as a combination of conditions regarding a plurality of item values without discriminating between an explanatory variable and an objective variable. In this case, the hypothesis of the first line of FIG. 3 may be represented as "remaining budget is PRESENT A number of clicks ≥ 100 A day of week = HOLIDAY A ad price is UP".

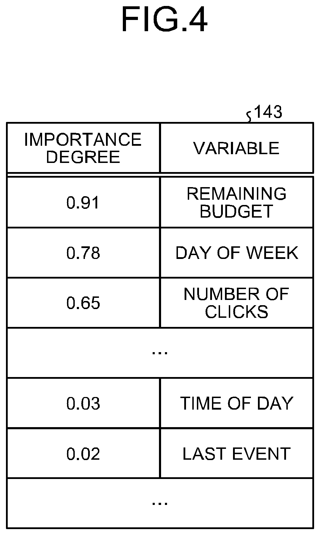

The information on variable 143 is an importance degree of each variable. FIG. 4 is a diagram illustrating an example of the information on variable. For example, the first line of FIG. 4 indicates that the importance degree of the variable "remaining budget" is 0.91. The importance degree of each variable may be calculated by the same method as the importance degree of a hypothesis, or calculated by a different method from the importance degree of a hypothesis. For example, the importance degree of each variable may be calculated by a known technique such as logistic regression.

The control unit 15 is realized, for example, in such a manner that a program stored in the internal storage apparatus is executed on a RAM as a work area by a Central Processing Unit (CPU), a Micro Processing Unit (MPU), a Graphics Processing Unit (GPU), or the like. The control unit 15 may be realized, for example, by an integrated circuit such as an Application Specific Integrated Circuit (ASIC) or a Field Programmable Gate Array (FPGA). The control unit 15 includes a generation unit 151, a calculation unit 152, and an extraction unit 153.

The generation unit 151 generates combinations of conditions regarding a plurality of item values included in the data, i.e., hypotheses. The generation unit 151 can generate a hypothesis from data having an explanatory variable and an objective variable like the log data 141. In this case, the generation unit 151 generates combinations of the objective variable and conditions regarding one or more explanatory variables corresponding to the objective variable as hypotheses.

The generation unit 151 also generates combinations of conditions regarding a plurality of item values included in data that increases with a lapse of time. For example, the generation unit 151 can generate combinations from time series data to which data is added with a lapse of time like the log data 141.

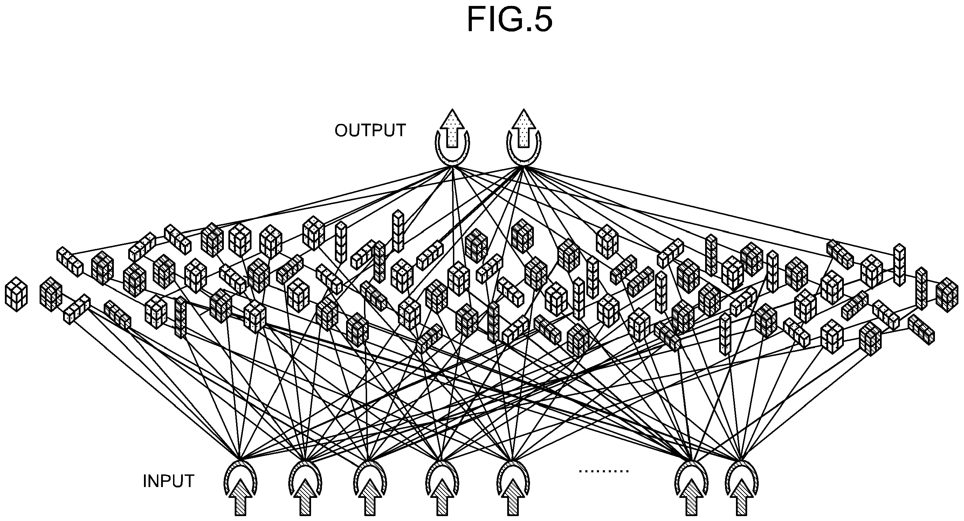

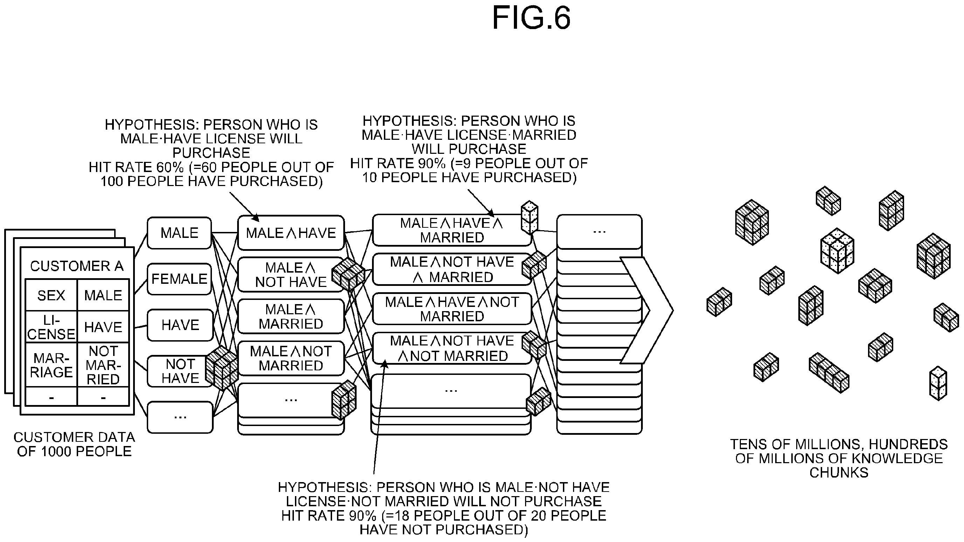

Herein, an example of a training technique of the extraction apparatus 10 will be described. The extraction apparatus 10 generates, by training, a model combining a hypothesis and an importance degree. FIGS. 5 and 6 are diagrams explaining the training technique. Deep Learning generally stacks neural networks that imitate a structure of a neural circuit of a human brain in several layers and realizes accuracy improvement by refining one model. Thus, deep Learning is a model that is too complex for a human to understand. Meanwhile, as illustrated in FIG. 5, the extraction apparatus 10 combines the data items to extract a large number of hypotheses, and performs machine training (e.g., Wide Learning) that adjusts importance degrees of the hypotheses (knowledge chunks (hereinafter, sometimes simply described as "chunks")) and constructs a classification model with high accuracy. The knowledge chunk is a model that is simple enough for a human to understand and describes a hypothesis that has potential of being approved as a relation between input and output with a logical expression.

Specifically, the extraction apparatus 10 treats all the combination patterns of the data items of the input data as hypotheses (chunks) and, by a hit rate of a classification label to each of the hypotheses, decides on the importance degree of the hypothesis. Then, the extraction apparatus 10 constructs a model based on a plurality of the extracted knowledge chunks and the label (objective variable). At this time, the extraction apparatus 10 performs a control such that the importance degree is small when the items constituting a knowledge chunk largely include the same items constituting another knowledge chunk.

A specific example will be described with reference to FIG. 6. Herein, consider a case where a customer who purchases a certain product or service is desired to be judged as an example. Customer data includes various items such as "sex", "presence of license", "marriage", "age", and "annual income". Taking all the combinations of the items as hypotheses, consider the importance degree of each of the hypotheses. For example, there are ten customers in the data for whom a hypothesis combining the items ""MALE", "HAVE", "MARRIED"" is true. When nine people out of the ten people have purchased the product or the like, the hypothesis "a person who is "MALE", "HAVE", "MARRIED" will PURCHASE" is considered as a hypothesis with a high hit rate, and is extracted as a knowledge chunk. Herein, for example, a binary indicating whether the product has been purchased or not serves as the label, i.e., the objective variable.

Meanwhile, there are 100 customers in the data for whom a hypothesis combining the items ""MALE", "HAVE"" is true. When only 60 people out of the 100 people have purchased the product or the like, a hit rate to PURCHASE is 60% and less than a threshold (e.g., 80). Thus, the hypothesis "a person who is "MALE", "HAVE" will PURCHASE" is considered as a hypothesis with a low hit rate, and is not extracted as a knowledge chunk.

Further, there are 20 customers in the data for whom a hypothesis combining the items ""MALE", "NOT HAVE", "NOT MARRIED"" is true. When 18 people out of the 20 people have not purchased the product or the like, a hit rate to NOT PURCHASE is 90% and more than or equal to the threshold (e.g., 80). Thus, the hypothesis "a person who is "MALE", "NOT HAVE", "NOT MARRIED" will NOT PURCHASE" is considered as a hypothesis with a high hit rate, and is extracted as a knowledge chunk.

In this manner, the extraction apparatus 10 derives tens of millions or hundreds of millions of knowledge chunks that support PURCHASE or NOT PURCHASE, and performs training of a model. The model thus trained enumerates combinations of features as hypotheses (chunks). An importance degree as an example of likelihood that indicates probability is added to each of the hypotheses. Summation of the importance degrees of the hypotheses appearing in the input data serves a score. When the score is more than or equal to a threshold, output of the model is a positive example.

In other words, the score is an index that indicates the probability of the state and a total value of the importance degrees of the chunks that satisfy all the belonging features out of the chunks (hypotheses) generated for the model. For example, assume that, in a state where a chunk A is corresponding to "importance degree: 20, feature (A1, A2)", a chunk B is corresponding to "importance degree: 5, feature (B1)", and a chunk C is corresponding to "importance degree: 10, feature (C1, C2)", there are actions (A1, A2, B1, C1) in a user log. At this time, since all the features of the chunk A and the chunk B appear, the score is "20 + 5 = 25". Herein, the features correspond to the user's actions or the like.

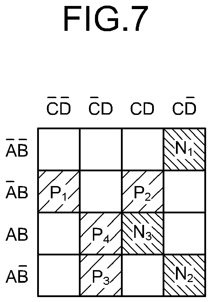

A specific method of generating a model by the generation unit 151 will be described with reference to FIGS. 7 to 11. FIG. 7 is an explanatory diagram explaining a relation between variables and data. Herein, as illustrated in FIG. 7, assume that there are four conditions A, B, C, and D regarding the explanatory variables of the log data 141. Negation of A is represented as $^-$A (- immediately above A). For example, when A represents a condition "remaining budget is PRESENT", $^-$A represents a condition "remaining budget is NOT PRESENT". For example, when B represents a condition "number of clicks $\geq$ 100", $^-$B represents a condition "number of clicks < 100".

$P_1$, $P_2$, $P_3$, $P_4$, $N_1$, $N_2$, and $N_3$ are included in the log data 141, and represent data that associates the objective variable with conditions of the explanatory variables. Herein, $P_i$ represents the data of which objective variable is "UP" and $N_j$ represents the data of which objective variable is "DOWN" (however, i and j are arbitrary integers). As illustrated in FIG. 2, in the log data 141, values of the objective variable include "HOLD" as well as "UP" and "DOWN". However, the description will be provided under the assumption that the value of the objective variable is "UP" or "DOWN". In the following description, "UP" and "DOWN" may be sometimes represented as + and -, respectively.

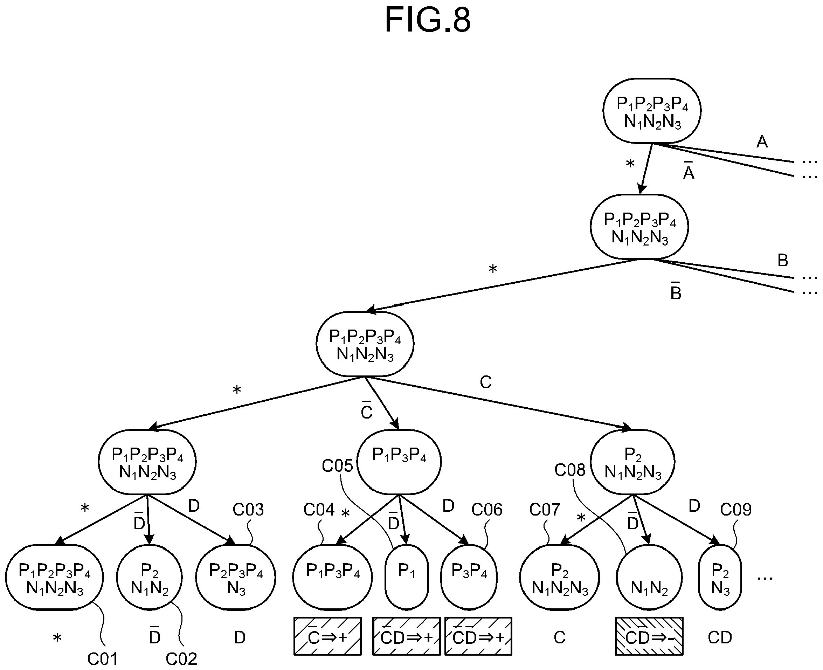

First, as illustrated in FIG. 8, the generation unit 151 exhaustively enumerates combinations of possible values for each of the explanatory variables included in $P_1$, $P_2$, $P_3$, $P_4$, $N_1$, $N_2$, and $N_3$. FIG. 8 is an explanatory diagram explaining generation of hypotheses. Herein, the possible values are * (not used), 1 (used), and 0 (negation of condition is used).

The generation unit 151 may place a limitation such that the number of the explanatory variables to be combined is less than or equal to a predetermined number. For example, the generation unit 151 may place a limitation such that, in a case of the four explanatory variables A to D, the number of the explanatory variables to be combined is two or less. In this case, the generation unit 151 combines at least two explanatory variables that are * (not used) out of the four explanatory variables. As the number of the explanatory variables increases (e.g., 1000), the number of the combinations explosively increases. Accordingly, the limitation can preliminarily suppress the increase in the number of the combinations to be enumerated.

The generation unit 151 classifies the enumerated combination according to whether the combination is $P_1$, $P_2$, $P_3$, $P_4$, $N_1$, $N_2$, or $N_3$, and determines whether the combination is a valid combination that satisfies a specific condition. An example of the specific condition is that the conditions for the explanatory variables coincide with the data of the log data 141 more than or equal to a predetermined number of times. In this case, the generation unit 151 can generate combinations of the conditions that coincide with the data more than or equal to the predetermined number of times out of the conditions.

In the example of FIG. 8, the generation unit 151 enumerates a combination C01 such that all the four explanatory variables A to D are *, a combination C04 of $^-$C, a combination C09 of CD (C and D are 1, and A and B are *), and the like.

As illustrated in FIG. 8, the generation unit 151 enumerates data that falls into each of the combinations C01 to C09 based on the explanatory variables of $P_1$, $P_2$, $P_3$, $P_4$, $N_1$, $N_2$, and $N_3$. For example, the generation unit 151 enumerates $P_2$, $N_1$, and $N_2$ as the data that falls into the combination C02. In this case, the data enumerated for the combination C02 mixedly includes data ($P_2$) of which objective variable is + and data ($N_1$, $N_2$) of which objective variable is -. Thus, the combination C02 has a low possibility of being a hypothesis that properly describes whether the objective variable is + or -. Consequently, the generation unit 151 does not adopt the combination C02 as a valid hypothesis.

Meanwhile, the generation unit 151 enumerates $N_1$, and $N_2$ as the data that falls into the combination C08. In this case, the data enumerated for the combination C08 only includes data ($N_1$, $N_2$) of which objective variable is -. Thus, the generation unit 151 adopts the combination C08 as a valid hypothesis.

The generation unit 151 may adopt, even when the different objective variable is mixed, the combination as a valid hypothesis according to the mixture ratio. For example, when 80% or more of data that corresponds to a certain combination has the objective variable that is +, the generation unit 151 may adopt the combination as a valid hypothesis.

The generation unit 151 excludes a combination that corresponds to a special case of a certain combination from the hypotheses. For example, the combinations C05 and C06 of FIG. 8 are special cases of the combination C04. This is because the combinations C05 and C06 are obtained by merely adding a literal to the combination C04.

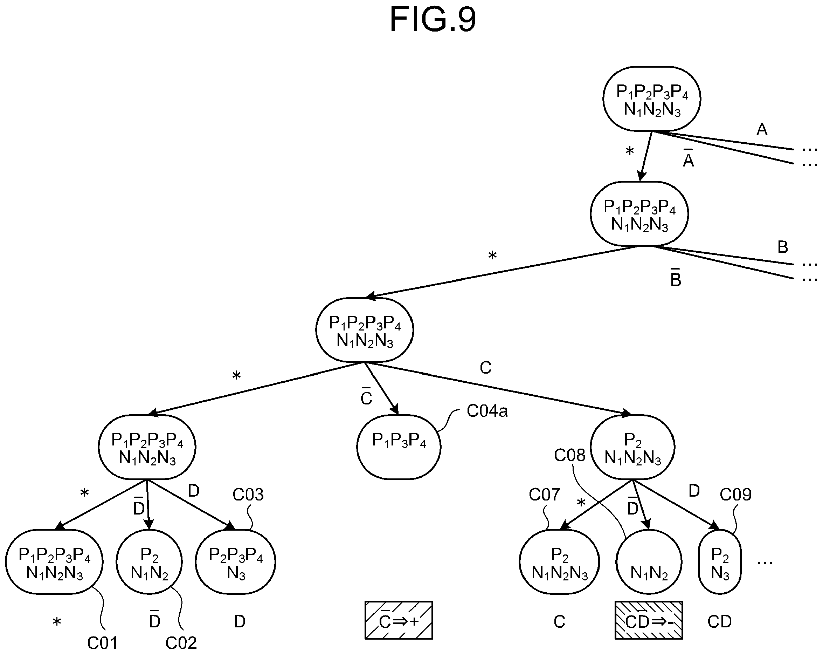

The generation unit 151 adopts combinations illustrated in FIG. 9 as hypotheses. That is, the generation unit 151 adopts the combinations C01, C02, C03, C04a, C07, C08, and C09 as hypotheses. The combination C04a is obtained by omitting the special cases of C04 out of the combinations that satisfy $^-$C.

FIG. 9 is an explanatory diagram explaining the generation of hypotheses. FIG. 9 illustrates Karnaugh maps representing contents of FIGS. 7 and 8. As illustrated in FIG. 9, the generation unit 151 considers the validity of the combinations of A (B, C, D are * (not used)) (S31), ⁻A (B, C, D are * (not used)) (S32), ⋯ in the order while changing the combinations (S31 to S35 ⋯).

Herein, the data $(P_1, P_3, P_4)$ with the objective variable of + falls into the combination of $^-C$ in S33. In S33, the number or the rate of the data $(P_1, P_3, P_4)$ to be classified into a + class is more than or equal to a predetermined value. Thus, the generation unit 151 determines the combination of $^-C$ in S33 are valid combination (hypothesis) to be classified into the + class. In the following processing, the combinations obtained by adding a literal to $^-C$ are excluded.

Secondly, after considering all the combinations of which three explanatory variables are * (not used), the generation unit 151 starts considering combinations of which two explanatory variables are * (not used) (S34). Herein, the training data $(P_1, P_2)$ with the objective variable of + falls into the combination of A⁻B in S35. In S35, the number or the rate of the training data $(P_1, P_2)$ to be classified into the + class is more than or equal to the predetermined value. Thus, the generation unit 151 determines the combination of A⁻B in S35 are valid combination (hypothesis) to be classified into the + class.

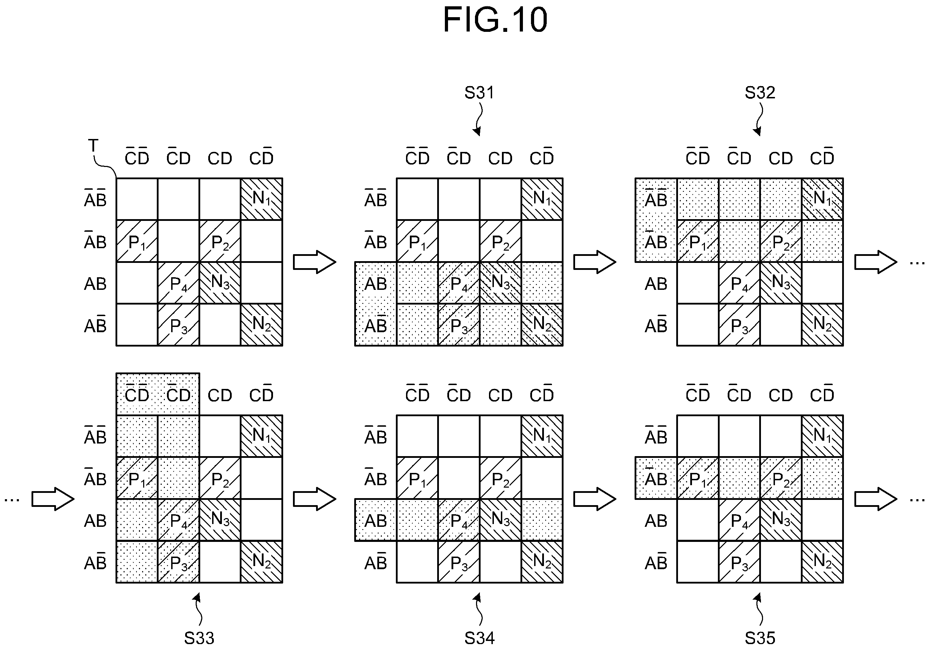

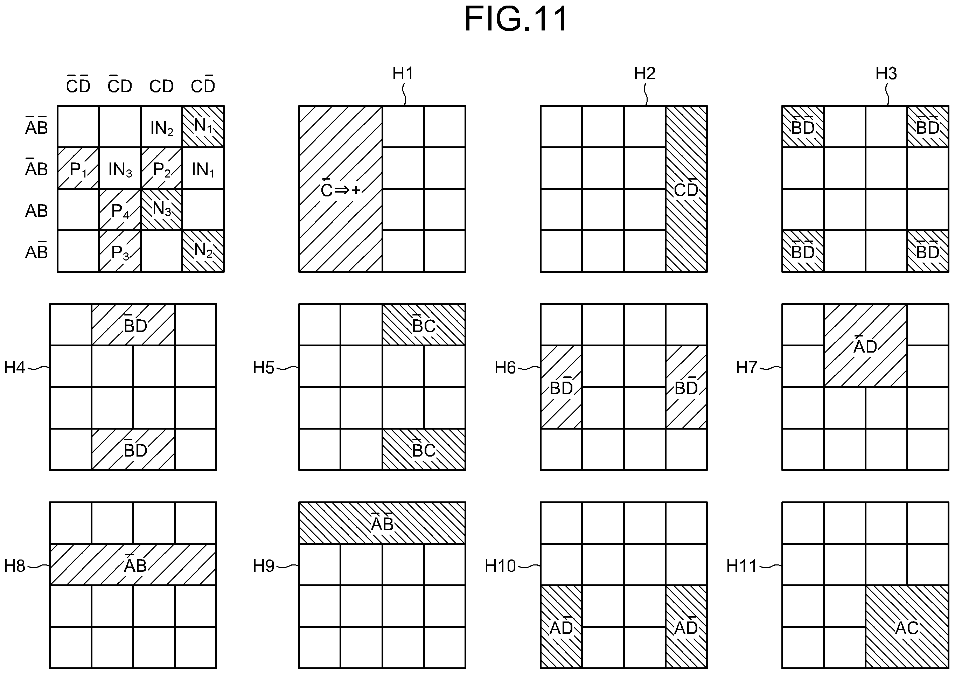

FIG. 10 is an explanatory diagram illustrating an example of the generated hypotheses. As illustrated in FIG. 11, the generation unit 151 generates hypotheses H1 to H11 of which classification results are + or - from $P_1, P_2, P_3, P_4, N_1, N_2$, and $N_3$, and stores the generated hypotheses in the storage unit 14 as the information on hypothesis 142.

Each of the hypotheses H1 to H11 is an independent hypothesis that has a request of properly explaining that the classification result of the data is + or -. Accordingly, in some cases, there may be hypotheses inconsistent with each other like the hypothesis H2 and the hypothesis H6.

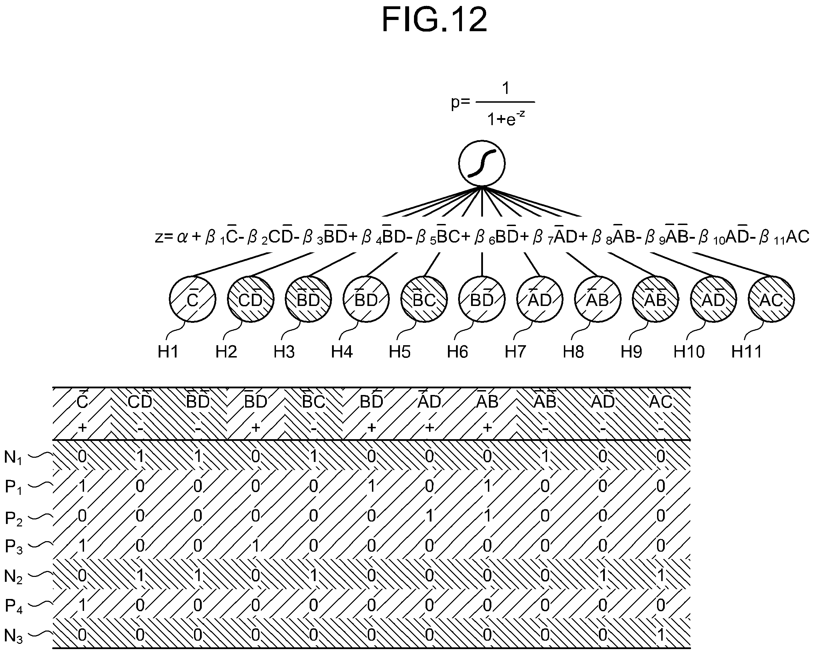

The calculation unit 152 calculates an importance degree that is a conjunction degree in the data for each of the combinations using the model trained from the data. For example, the calculation unit 152 calculates the importance degree of each of the hypotheses using logistic regression. FIG. 12 is an explanatory diagram explaining the calculation of the importance degree by logistic regression. The calculation unit 152 applies the log data 141 to a model expression illustrated in FIG. 12 and calculates optimal coefficients $\beta_1$ to $\beta_{11}$. The calculation unit 152 updates the importance degrees of the information on hypothesis 142 with the coefficients determined by the calculation.

Then, the importance degree of each of the hypotheses becomes larger as the conjunction degree in the log data 141 is larger. Further, the importance degree can be called likelihood of the objective variable when the condition of each of the explanatory variables is satisfied. Thus, the calculation unit 152 calculates, as the importance degree, the likelihood of the objective variable with respect to satisfaction of the conditions for each of the combinations.

The extraction unit 153 extracts a specific combination from the combinations based on the condition or the importance degree. In other words, the extraction unit 153 extracts a hypothesis that is considered particularly important from the information on hypothesis 142 based on the importance degree. For example, the extraction unit 153 extracts a combination of which importance degree is more than or equal to a predetermined value from the combinations.

The hypotheses extracted by the extraction unit 153 and the importance degrees of the hypotheses are displayed in a list form by the output unit 13 that functions as a display apparatus such as a display. At this time, the output unit 13 highlights a condition regarding a variable that is not important alone but is important when combined with another variable.

The output unit 13 highlights a first combination compared to another combination when an importance degree of the first combination that is a combination of a first condition and another condition exceeds a first standard, and an importance degree of the first condition alone does not exceed a second standard.

For example, assume that the first standard is "an importance degree of a hypothesis is more than or equal to 0.5". Further, assume that the second standard is "an importance degree of a variable is less than or equal to 0.1". Then, as illustrated in FIG. 3, the importance degree of the hypothesis "when remaining budget is NOT PRESENT A time of day = MORNING, price is DOWN" is 0.78 and exceeds the first standard. As illustrated in FIG. 4, the importance degree of the variable "time of day" is 0.03 and does not exceed the second standard. Thus, for example, the output unit 13 highlights the part "time of day = MORNING" by changing the font or style, marking, and the like.

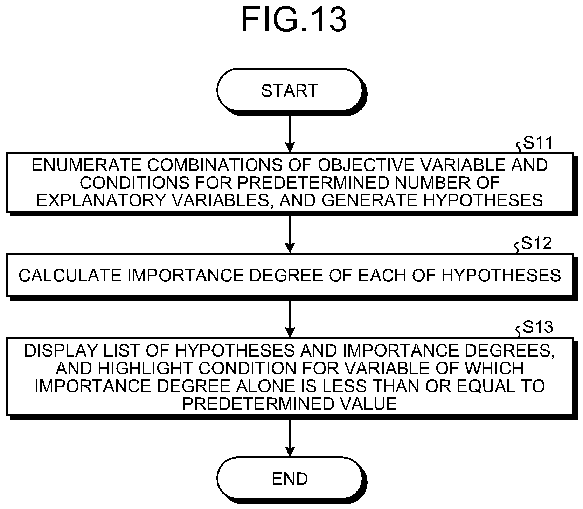

A flow of a process by the extraction apparatus 10 will be described with reference to FIG. 13. FIG. 13 is a flow chart illustrating the flow of the extraction process according to the first embodiment. As illustrated in FIG. 13, first, the extraction apparatus 10 enumerates combinations of the objective variable and conditions for a predetermined number of the explanatory variables, and generates hypotheses (Step S11). For example, the extraction apparatus 10 keeps a combination that does not satisfy a specific condition or that is a special case of a certain combination out of the enumerated combinations from being included in the hypotheses.

Secondly, the extraction apparatus 10 calculates an importance degree of each of the hypotheses (Step S12). The extraction apparatus 10 then displays a list of the hypotheses and the importance degrees, and highlights a condition for a variable of which importance degree alone is less than or equal to a predetermined value (Step S13).

Advantageous Effect

As described above, the extraction apparatus 10 generates combinations of conditions regarding a plurality of item values included in the data. The extraction apparatus 10 calculates an importance degree that is a conjunction degree in the data for each of the combinations using a model trained from the data. The extraction apparatus 10 extracts a specific combination from the combinations based on the condition or the importance degree. In this way, the extraction apparatus 10 can evaluate the importance degree of a condition combining a plurality of item values. Therefore, according to the embodiment, it is possible to evaluate an enormous number of hypotheses resulting from the combinations of the item values, and make planning and implementation of measures more efficient.

The extraction apparatus 10 generates combinations of the objective variable and conditions regarding one or more explanatory variables corresponding to the objective variable. The extraction apparatus 10 calculates, as an importance degree, the likelihood of the objective variable with respect to satisfaction of the condition for each of the combinations. Therefore, according to the embodiment, it is possible to evaluate the hypotheses based on a model for estimating the objective variable from the explanatory variable.

The extraction apparatus 10 extracts a combination of which importance degree is more than or equal to a predetermined value from the combinations. In this way, the extraction apparatus 10 extracts the combination that is considered important after exhaustively calculating the importance degrees of the combinations. Accordingly, the extraction apparatus 10 can provide a hypothesis that is particularly important in planning measures.

The extraction apparatus 10 displays a list of the combinations extracted by the extraction unit with highlighting a first combination compared to another combination when an importance degree of the first combination that is a combination of a first condition and another condition out of the combinations extracted by the extraction unit exceeds a first standard, and an importance degree of the first condition alone does not exceed a second standard. It is particularly difficult for a human to detect a hypothesis including a variable of which importance degree alone is not large. According to the embodiment, it is possible to suggest such a hypothesis while indicating that the detection is difficult.

The extraction apparatus 10 generates combinations of a condition that coincide with the data more than or equal to a predetermined number of times out of the conditions. In this way, the extraction apparatus 10 can make the calculation more efficient by excluding a condition that is considered unimportant in advance.

The extraction apparatus 10 generates combinations of conditions regarding a plurality of item values included in data that increases with a lapse of time. This allows the extraction apparatus 10 to extract a hypothesis even when an amount of the data is small.

In the above-mentioned embodiment, the case where the objective variable indicates whether the advertisement price is raised, maintained, or lowered has been described. Meanwhile, the objective variable may indicate whether a conversion (CV) of the advertisement has occurred or not. In this case, as in the example of FIG. 8 or the like, the objective variable can be represented by a binary.

[b] Second Embodiment

The extraction apparatus 10 may classify the extracted hypothesis into a predetermined group. As a second embodiment, an example in a case where an extraction apparatus 10 classifies a hypothesis according to a classification condition will be described. In the description of the second embodiment, the description common to the first embodiment will be appropriately omitted.

Functional Configuration

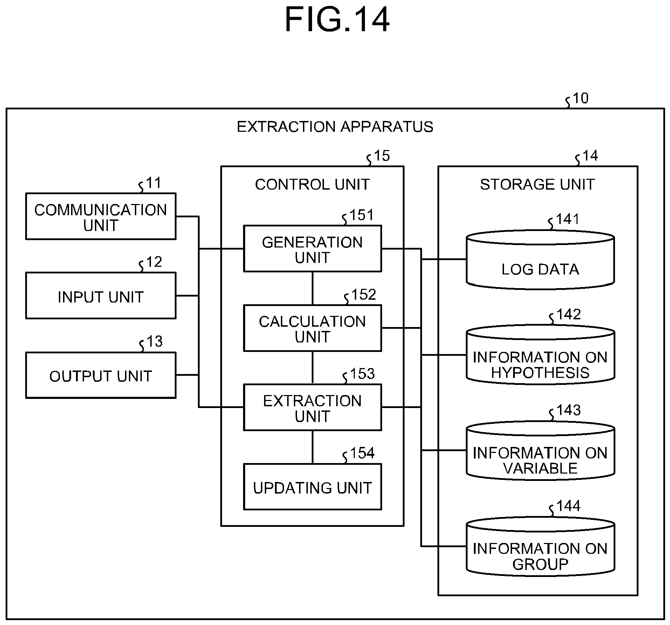

A functional configuration of the extraction apparatus according to the second embodiment will be described with reference to FIG. 14. FIG. 14 is a diagram illustrating an example of the functional configuration of the extraction apparatus according to the second embodiment. As illustrated in FIG. 14, the extraction apparatus 10 includes a communication unit 11, an input unit 12, an output unit 13, a storage unit 14, and a control unit 15.

The storage unit 14 stores log data 141, information on hypothesis 142, information on variable 143, and information on group 144. In the second embodiment, unlike the first embodiment, the storage unit 14 stores the information on group 144. The log data 141, the information on hypothesis 142, and the information on variable 143 in the second embodiment are data used for the same purpose as in the first embodiment.

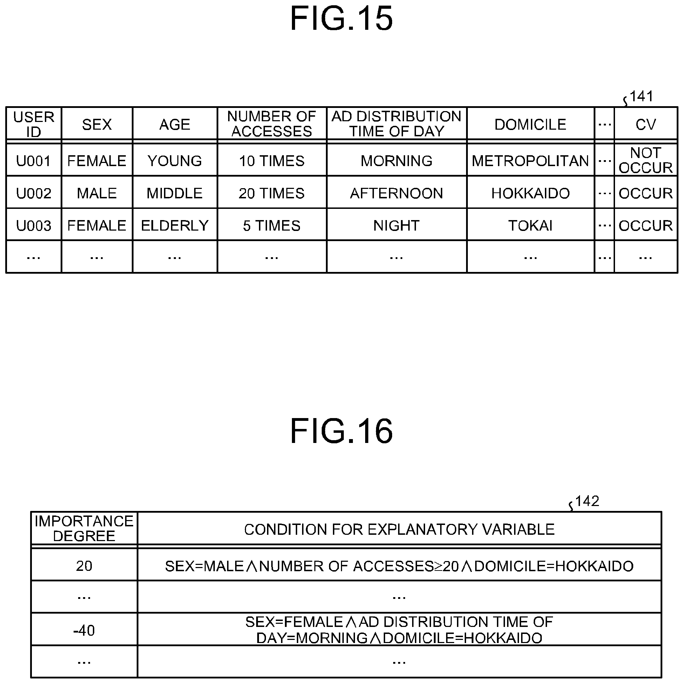

FIG. 15 is a diagram illustrating an example of the log data. As illustrated in FIG. 15, the log data 141 includes "user ID", "sex", "age", "number of accesses", "ad distribution time of day", and "domicile" as explanatory variables. The log data 141 further includes "CV" as an objective variable. The objective variable "CV" indicates whether the CV of the advertisement has occurred or not. For example, when a product corresponding to the advertisement has been purchased or transition to a product purchase page corresponding to the advertisement has been performed, the CV is considered to have occurred.

For example, the first line of FIG. 15 indicates that, as for a user with user ID "U001", sex is "FEMALE", age is "YOUNG", domicile is "METROPOLITAN", ad distribution time of day is "MORNING", number of accesses is 10 TIMES, and CV is NOT OCCUR. For example, the second line of FIG. 15 indicates that, as for a user with user ID "U002", sex is "MALE", age is "MIDDLE", domicile is "HOKKAIDO", ad distribution time of day is "AFTERNOON", number of accesses is 20 TIMES, and CV is OCCUR.

FIG. 16 is a diagram illustrating an example of the information on hypothesis. Also, in the second embodiment, hypotheses are generated based on the log data in the same manner as in the first embodiment. For example, the first line of FIG. 16 indicates that an importance degree of a hypothesis that, when "sex = MALE ∧ number of accesses ≥ 20 ∧ domicile = HOKKAIDO", CV is OCCUR is 20. Note that the importance degree for the hypothesis of the second embodiment becomes larger as the possibility of occurrence of the CV is higher.

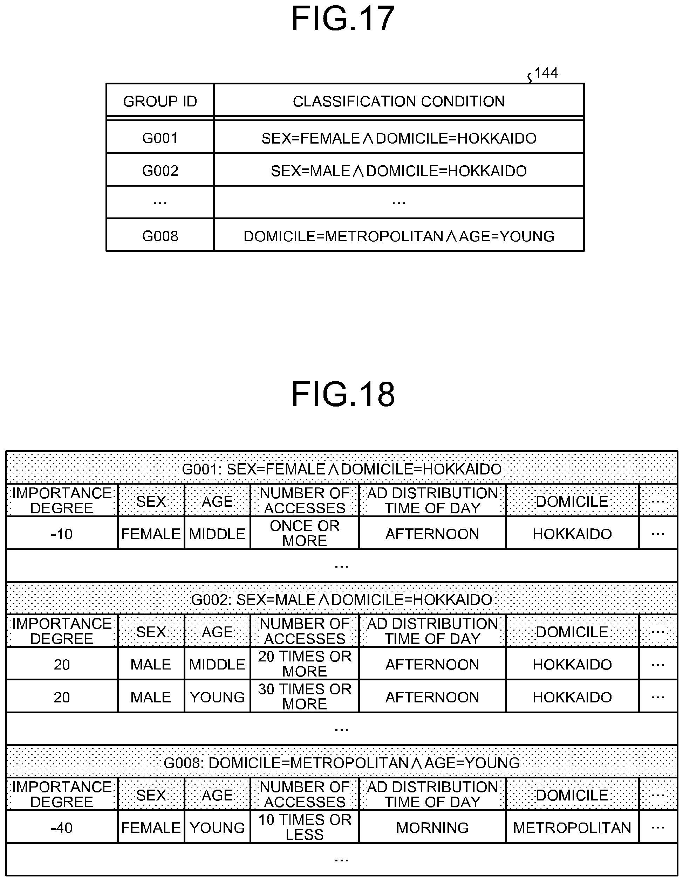

The information on group 144 is a classification condition for classifying a hypothesis into a group. FIG. 17 is a diagram illustrating an example of the information on group. As illustrated in FIG. 17, the information on group 144 includes "group ID" and "classification condition".

The control unit 15 includes a generation unit 151, a calculation unit 152, an extraction unit 153, and an updating unit 154. The generation unit 151 and the calculation unit 152 perform the same processing as in the first embodiment. The generation unit 151 generates combinations of conditions regarding a plurality of item values included in the data, i.e., hypotheses. The calculation unit 152 calculates an importance degree that is a conjunction degree in the data for each of the combinations using a model trained from the data. The hypotheses generated by the generation unit 151 and the importance degrees calculated by the calculation unit 152 are stored in the storage unit 14 as the information on hypothesis 142.

The extraction unit 153 extracts a specific combination from the combinations based on the conditions or the importance degree for each of groups by which classification has been performed according to a classification condition that is at least a part of the conditions The extraction unit 153 refers to the information on group 144 and classifies the hypotheses in the information on hypothesis 142 into the groups.

FIG. 18 is an explanatory diagram explaining displayed hypotheses of each of the groups. The output unit 13 can display the hypotheses that have been extracted by the extraction unit 153 and classified into the groups as in the FIG. 18. For example, the classification condition of the group with group ID "G001" is "sex = FEMALE ∧ domicile = HOKKAIDO". Thus, as illustrated in FIG. 18, the extraction unit 153 classifies a hypothesis including "sex = FEMALE ∧ domicile = HOKKAIDO" into the group with group ID "G001".

The updating unit 154 updates the classification condition based on the hypotheses generated by the generation unit 151. For example, the updating unit 154 adds a condition that is included in a hypothesis generated by the generation unit 151 and is not included in the classification condition to the classification condition.

For example, assume that there is no classification condition that includes a condition "domicile = KANSAI". In this case, when a hypothesis "sex = MALE ∧ number of accesses ≥ 20 ∧ domicile = KANSAI" is generated, the updating unit 154 adds a classification condition that includes the condition "domicile = KANSAI". For example, the updating unit 154 can diverts the existing classification condition for adding the classification conditions such as "sex = FEMALE ∧ domicile = KANSAI" and "sex = MALE ∧ domicile = KANSAI".

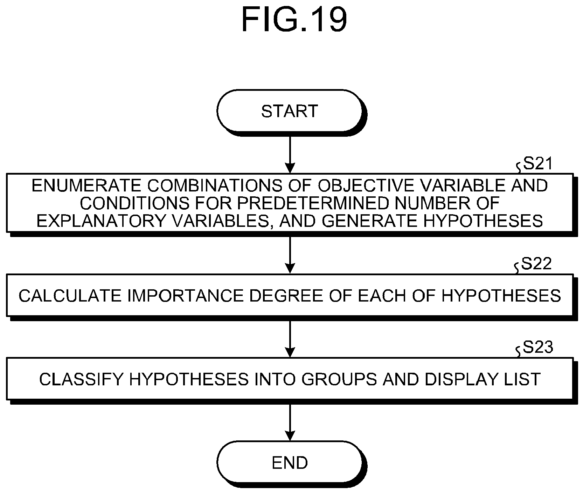

A flow of a process by the extraction apparatus 10 will be described with reference to FIG. 19. FIG. 19 is a flow chart illustrating the flow of the extraction process according to the second embodiment. As illustrated in FIG. 19, first, the extraction apparatus 10 enumerates combinations of the objective variable and conditions for a predetermined number of the explanatory variables, and generates hypotheses (Step S21). For example, the extraction apparatus 10 keeps a combination that does not satisfy a specific condition or that is a special case of a certain combination out of the enumerated combinations from being included in the hypotheses.

Secondly, the extraction apparatus 10 calculates an importance degree of each of the hypotheses (Step S22). The extraction apparatus 10 then displays a list of the extracted hypotheses after classifying the extracted hypotheses into groups according to classification conditions (Step S23).

Advantageous Effect

As described above, the extraction apparatus 10 generates combinations of conditions regarding a plurality of item values included in the data. The extraction apparatus 10 calculates an importance degree that is a conjunction degree in the data for each of the combinations using a model learned from the data. The extraction apparatus 10 extracts a specific combination from the combinations based on the conditions or the importance degree for each of groups by which classification has been performed according to a classification condition that is at least a part of the conditions In this way, the extraction apparatus 10 can evaluate the importance degree of a condition combining a plurality of item values and further classify the combinations into the groups. Therefore, according to the embodiment, it is possible to evaluate an enormous number of hypotheses resulting from the combinations of the item values, and more easily comprehend validity of a hypothesis in a group unit. This can make planning and implementation of measures more efficient.

The extraction apparatus 10 updates the classification condition based on the generated combinations. This makes it possible to optimize the classification condition depending on accumulation of the log data and the generation of a new hypothesis, and perform group classification that will further contributes to planning measures.

The updating unit 154 adds a condition that is included in the combinations generated by the generation unit 151 and is not included in the classification condition to the classification condition. This makes it possible to add a classification condition even when a hypothesis that has not been present is newly generated.

[c] Third Embodiment

In the above embodiments, the extraction of a hypothesis based on the importance degree has been explained. Meanwhile, the calculated importance degree can be utilized for planning measures such that the objective variable is optimized.

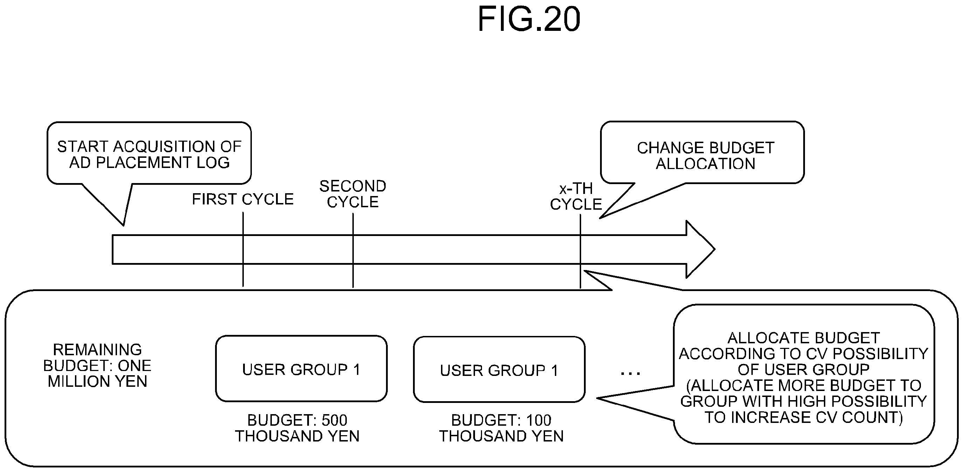

For example, as illustrated in FIG. 20, in a case of advertisement placement, a person who implements measures sometimes adjusts budget allocation to the advertisements in a predetermined cycle so that the CV will more frequently occur. FIG. 20 is an explanatory diagram explaining the cycle of budget allocation.

Especially in the early cycles, more efficient budget allocation may be needed based on limited CV result data. Thus, a method of predicting the CV of the data with high accuracy using a model learned from the known CV result data will be described as a third embodiment. Herein, the known CV result data is the hypotheses extracted by the method of the first embodiment and the importance degree of each of the hypotheses.

Functional Configuration

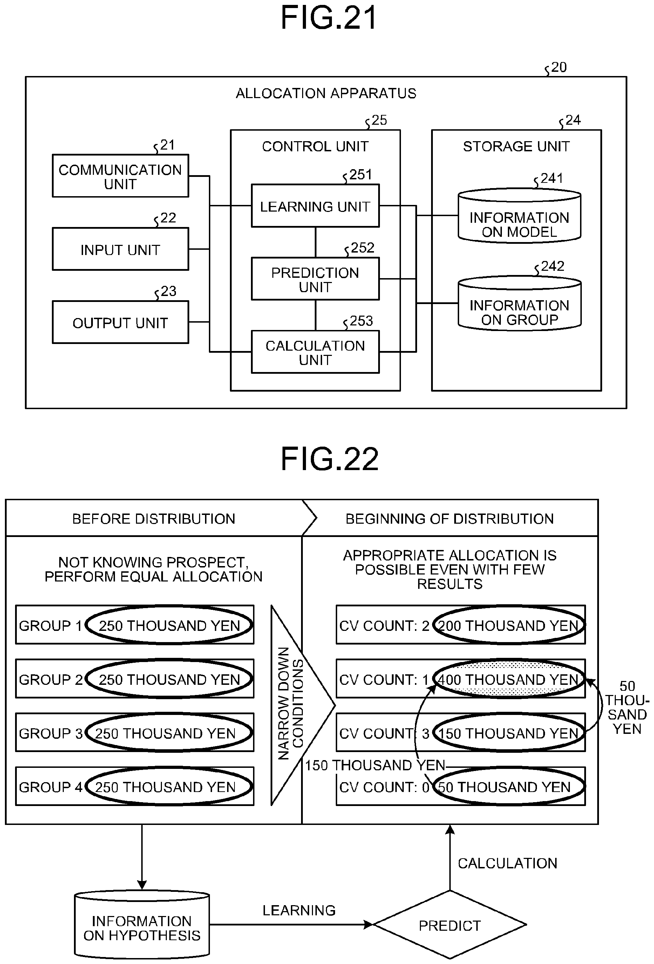

A functional configuration of an allocation apparatus according to the third embodiment will be described with reference to FIG. 21. FIG. 21 is a diagram illustrating an example of the functional configuration of the allocation apparatus according to the third embodiment. As illustrated in FIG. 21, the allocation apparatus 20 includes a communication unit 21, an input unit 22, an output unit 23, a storage unit 24, and a control unit 25.

The communication unit 21 is an interface to communicate data with another apparatus. For example, the communication unit 21 is an NIC and communicates data via the Internet.

The input unit 22 is an apparatus with which a user inputs information. An example of the input unit 22 includes a mouse and a key board. The output unit 23 is a display that displays a screen, for example. The input unit 22 and the output unit 23 may be a touch panel display.

The storage unit 24 is an example of a storage apparatus that stores data, programs to be executed by the control unit 25, and the like. For example, the storage unit 24 is a hard disk, a memory, or the like. The storage unit 24 stores information on model 241 and information on group 242.

The information on model 241 is information that enables construction of a model for predicting an objective variable based on an explanatory variable. For example, the importance degree in the second embodiment becomes larger as the CV occurs more frequently. Accordingly, the model constructed from the information on model 241 may be a model that calculates the importance degree from the conditions for the explanatory variables illustrated in FIG. 16. In the third embodiment, the importance degree calculated by the model is referred to as a CV score.

The information on group 242 is a classification condition for classifying a hypothesis into a group. The information on group 242 is the same information as the information on group 144 of the second embodiment.

The control unit 25 is realized, for example, in such a manner that a program stored in the internal storage apparatus is executed on a RAM as a work area by a CPU, an MPU, a GPU, or the like. The control unit 25 may be realized, for example, by an integrated circuit such as an ASIC or an FPGA. The control unit 25 includes a learning unit 251, a prediction unit 252, and a calculation unit 253.

Herein, the learning unit 251, the prediction unit 252, and the calculation unit 253 perform processing concerning optimization of budget allocation. FIG. 22 is an explanatory diagram explaining the optimization of the budget allocation. As illustrated in FIG. 22, before advertisement distribution, the budget is equally allocated to each of groups. Then, for example, the extraction apparatus of the second embodiment generates the information on hypothesis from the acquired log data.

The learning unit 251 performs learning of a model. The prediction unit 252 uses the learned model to predict the CV score from the explanatory variable of unknown data. The calculation unit 253 then calculates an amount of the budget to be allocated from the predicted CV score. Processing by the units will be describe below.

The learning unit 251 performs, by using a part of data including an objective variable and one or more explanatory variables corresponding to the objective variable as learning data, learning of a model that predicts the objective variable from the explanatory variables of the data. For example, the learning unit 251 performs learning of the model by the above-mentioned Wide Learning technique.

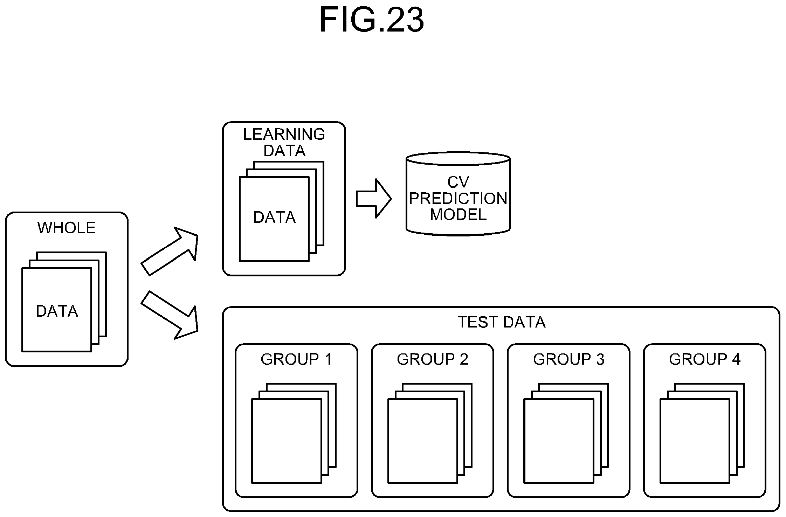

As illustrated in FIG. 23, the learning unit 251 uses a part of the whole data as the learning data. FIG. 23 is an explanatory diagram explaining classification of the data. The learning unit 251 uses, for example, eight tenths of the information on hypothesis generated by the extraction apparatus as the learning data. Note that the prediction unit 252 also functions as a classification unit.

The prediction unit 252 classifies test data obtained by excluding the learning data from the data into a group according to a classification condition regarding at least a part of the explanatory variables of the data. The prediction unit 252 uses, for example, two tenths of the information on hypothesis generated by the extraction apparatus as the test data. The prediction unit 252 classifies the hypothesis into a group according to a classification condition of the information on group 242.

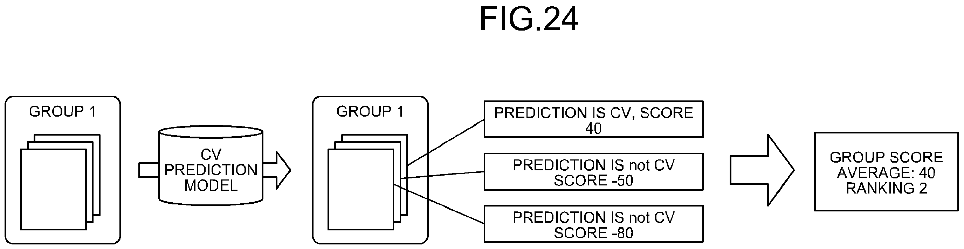

The prediction unit 252 predicts the objective variable, i.e., the CV score, from the explanatory variable of the test data using the learned model for each of groups. FIG. 24 is an explanatory diagram explaining the CV score. Herein, the predicted score being plus means that the possibility of occurrence of the CV is high (CV). Meanwhile, the predicted score being minus means that the possibility of non-occurrence of the CV is high (not CV).

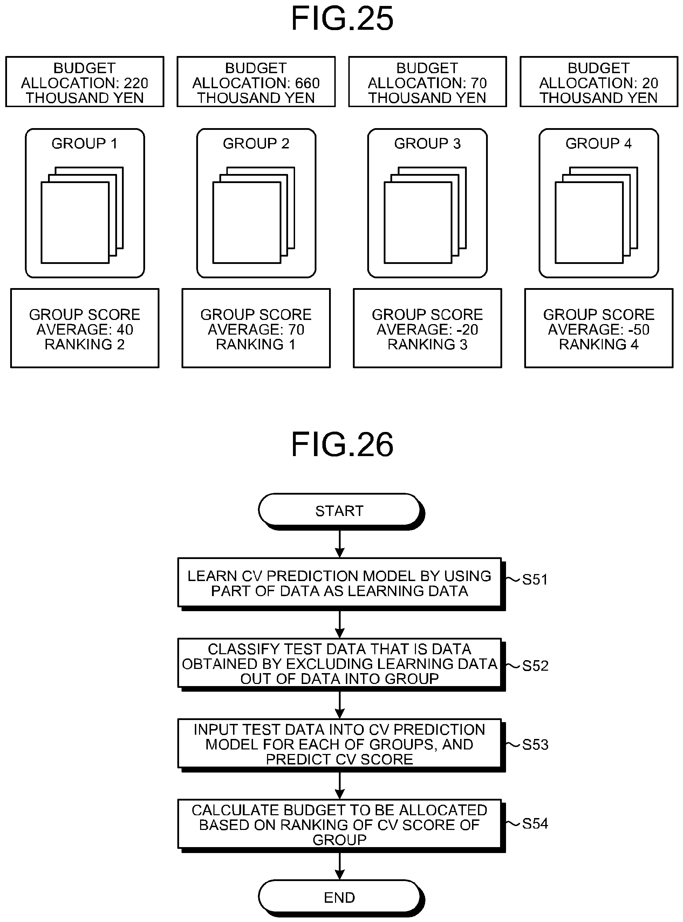

The prediction unit 252 calculates an average of the CV score in a group unit. Further, as illustrated in FIG. 25, the prediction unit 252 calculates ranking of the average of the CV score among the groups. FIG. 25 is an explanatory diagram explaining the ranking.

The calculation unit 253 calculates an amount of the budget to be allocated to each of the groups based on the objective variable for each of the groups predicted by the predicting processing. The amount of the budget exemplifies a resource amount. The resource amount may be the number of people in charge, distribution time, or the like.

The calculation unit 253 calculates in such a manner that the resource amount to be allocated becomes larger as size ranking of the objective variable of each of the groups predicted by the prediction unit 252 is higher. The calculation unit 253 calculates the budget to be allocated according to Expression (1), for example. Note that haibun is an allocation amount to a certain group, rank is the ranking of the group, yosan is the total budget, and e is a preset constant. Herein, assume e = 3 as an example.

$$haibun(rank,\ yosan,\ e) = (e-1) \times yosan\ /\ e^{rank} \qquad (1)$$

Expression (1) means that 2/3 of the total budget is allocated to the first-ranked group, 2/3 of the remaining budget is allocated to the second-ranked group, and similarly 2/3 of the remaining budget is allocated to the next-ranked group, and so forth. As a result, as illustrated in FIG. 25, 660 thousand yen that is about 2/3 of the total budget, one million yen, is allocated to the first-ranked group 2. Further, 220 thousand yen that is about 2/3 of the remaining budget, 340 thousand yen, is allocated to the second-ranked group 1.

A flow of a process by the allocation apparatus 20 will be described with reference to FIG. 26. FIG. 26 is a flow chart illustrating the flow of the allocation process according to the third embodiment. As illustrated in FIG. 26, first, the allocation apparatus 20 learns a CV prediction model by using a part of the data as the learning data (Step S51). Secondly, the allocation apparatus 20 classifies the test data that is data obtained by excluding the learning data out of the data into a group (Step S52).

The allocation apparatus 20 inputs the test data into the CV prediction model for each of groups and predicts the CV score (Step S53). The allocation apparatus 20 then calculates the budget to be allocated based on the ranking of the CV score of the group (Step S54).

Advantageous Effect

As described above, the allocation apparatus 20 performs, by using a part of data including an objective variable and one or more explanatory variables corresponding to the objective variable as learning data, learning of a model that predicts the objective variable from the explanatory variables of the data. The allocation apparatus 20 classifies test data obtained by excluding the learning data from the data into a group according to a classification condition regarding at least a part of the explanatory variables of the data. The allocation apparatus 20 predicts the objective variable from the explanatory variables of the test data using the learned model for each of groups. The allocation apparatus 20 calculates a predetermined resource amount to be allocated to each of the groups based on the objective variable for each of the groups predicted by the predicting processing. In this way, the allocation apparatus 20 can predict the objective variable by utilizing a hypothesis based on the result data. Therefore, according to the embodiment, even when the result data is limited, it is possible to predict a result for a hypothesis and plan effective measures.

The allocation apparatus 20 calculates in such a manner that the resource amount to be allocated becomes larger as size ranking of the objective variable of each of the groups predicted by the prediction unit 252 is higher. This makes it possible to directly calculate the suitable budget allocation to achieve a goal by setting the final goal of the measures such as occurrence of the CV, for example, to the objective variable.

System

The processing procedures, control procedures, specific names, and information including a variety of data and parameters that are described above or illustrated in the drawings may be arbitrarily changed unless otherwise noted. The specific examples, distributions, numerical values, and the like described in the embodiments are merely examples and may be arbitrarily changed.

The components of the illustrated apparatuses are functionally conceptual and not necessarily physically configured as illustrated. In other words, the specific forms of distribution or integration of the apparatuses are not limited to the illustrated forms. All or a part of the apparatuses may be functionally or physically distributed or integrated in arbitrary units depending on a variety of loads, usage conditions, or the like. Further, all or an arbitrary part of the processing functions that are implemented in the apparatuses may be realized by a CPU and a program analyzed and executed by the CPU, or may be realized as a hardware by a wired logic.

Hardware

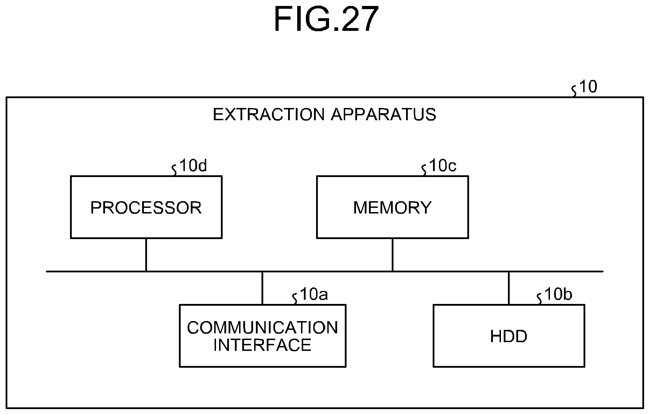

FIG. 27 is a diagram explaining a hardware configuration example. As illustrated in FIG. 27, the extraction apparatus 10 includes a communication interface 10a, a Hard Disk Drive (HDD) 10b, a memory 10c, and a processor 10d. The units illustrated in FIG. 27 are connected with each other via a bus or the like. The allocation apparatus 20 is also realized by an apparatus having the hardware configuration illustrated in FIG. 27.

The communication interface 10a is a network interface card or the like, and communicates with another server. The HDD 10b stores a program that causes the functions illustrated in FIG. 1 to operate and DBs.

The processor 10d reads the program that performs the same processing as the processing units illustrated in FIG. 14 from the HDD 10b or the like and develops the program on the memory 10c. This causes a process that implements the functions illustrated in FIG. 1 or the like to run. In other words, this process implements the same functions as the processing units included in the extraction apparatus 10. Specifically, the processor 10d reads the program having the same functions as the generation unit 151, the calculation unit 152, the extraction unit 153, and the updating unit 154 from the HDD 10b or the like. The processor 10d then runs the process that performs the same processing as the generation unit 151, the calculation unit 152, the extraction unit 153, the updating unit 154, and the like. The processor 10d is a hardware circuit such as a CPU, an MPU, or an ASIC, for example.

The extraction apparatus 10 thus operates as an information processing apparatus that implements the classification method by reading and executing the program. The extraction apparatus 10 may further realize the same functions as in the above-mentioned embodiments by reading the program from a recording medium using a medium reading apparatus and executing the read program. A program mentioned in the other embodiment is not limited to being executed by the extraction apparatus 10. For example, the present invention is similarly applicable to a case where another computer or server executes the program or where they execute the program in collaboration.

The programs may be distributed via a network such as the Internet. The programs may be recorded in a computer-readable recording medium such as a hard disk, a flexible disk (FD), a CD-ROM, a Magneto-Optical disk (MO), and a Digital Versatile Disc (DVD) and may be read from the recording medium to be executed by a computer.

According to one aspect, it is possible to make the planning and implementation of measures more efficient.

**Claims**

1. An allocation program that causes a computer (20) to execute a process comprising:

performing, by using a part of data including an objective variable and one or more explanatory variables corresponding to the objective variable as training data, training of a model that predicts the objective variable from the explanatory variables of the data;
classifying test data obtained by excluding the training data from the data into a group according to a classification condition regarding at least a part of the explanatory variables of the data;
predicting the objective variable from the explanatory variables of the test data using the trained model for each of groups by which classification has been performed at the classifying; and
calculating a predetermined resource amount to be allocated to each of the groups based on the objective variable for each of the groups predicted at the predicting.

2. The allocation program according to claim 1, wherein the calculating includes calculating in such a manner that the resource amount to be allocated becomes larger as size ranking of the objective variable of each of the groups predicted at the predicting is higher.

**3.** An allocation method comprising:

performing, by using a part of data including an objective variable and one or more explanatory variables corresponding to the objective variable as training data, training of a model that predicts the objective variable from the explanatory variables of the data;

classifying test data obtained by excluding the training data from the data into a group according to a classification condition regarding at least a part of the explanatory variables of the data;

predicting the objective variable from the explanatory variables of the test data using the trained model for each of groups by which classification has been performed at the classifying; and

calculating a predetermined resource amount to be allocated to each of the groups based on the objective variable for each of the groups predicted at the predicting.

**4.** An extraction method comprising:

generating combinations of conditions regarding a plurality of item values included in data;

calculating an importance degree that is a conjunction degree in the data for each of the combinations using a model trained from the data; and

extracting a specific combination from the combinations based on the conditions or the importance degree for each of groups by which classification has been performed according to a classification condition that is at least a part of the conditions.

**5.** An allocation apparatus (20) comprising:

a training unit (251) configured to perform, by using a part of data including an objective variable and one or more explanatory variables corresponding to the objective variable as training data, training of a model that predicts the objective variable from the explanatory variables of the data;

a classification unit (252) configured to classify test data obtained by excluding the training data from the data into a group according to a classification condition regarding at least a part of the explanatory variables of the data;

a prediction unit (252) configured to predict the objective variable from the explanatory variables of the test data using the trained model for each of groups by which classification has been performed at the classifying; and

a calculation unit (253) configured to calculate a predetermined resource amount to be allocated to each of the groups based on the objective variable for each of the groups predicted at the predicting.

**6.** An extraction apparatus (10) comprising:

a generation unit (151) configured to generate combinations of conditions regarding a plurality of item values included in data;

a calculation unit (152) configured to calculate an importance degree that is a conjunction degree in the data for each of the combinations using a model trained from the data; and

an extraction unit (153) configured to extract a specific combination from the combinations based on the conditions or the importance degree for each of groups by which classification has been performed according to a classification condition that is at least a part of the conditions.

# FIG.1

EXTRACTION APPARATUS ⌐10

CONTROL UNIT ⌐15

STORAGE UNIT ⌐14

COMMUNICATION UNIT ⌐11

INPUT UNIT ⌐12

OUTPUT UNIT ⌐13

GENERATION UNIT ⌐151

CALCULATION UNIT ⌐152

EXTRACTION UNIT ⌐153

LOG DATA ⌐141

INFORMATION ON HYPOTHESIS ⌐142

INFORMATION ON VARIABLE ⌐143

# FIG.2

EP 3 702 977 A2

|  | EXPLANATORY VARIABLE | | | | | | OBJECTIVE VARIABLE |
|---|---|---|---|---|---|---|---|
| DATE AND TIME | NUMBER OF CLICKS | DAY OF WEEK | TIME OF DAY | LAST EVENT | REMAINING BUDGET | ... | AD PRICE |
| 2019/6/5 10:00 | 100 | HOLIDAY | AFTERNOON | SNS | 10000 | | DOWN |
| 2019/6/8 14:00 | 90 | WEEKDAY | AFTERNOON | NEWS | 5000 | ... | HOLD |
| 2019/6/9 22:00 | 110 | WEEKDAY | MORNING | VIDEO DISTRIBUTION | 250000 | | UP |
| ... | | | | | | ... | ... |

141

# FIG.3

142

| IMPORTANCE DEGREE | CONDITION FOR EXPLANATORY VARIABLE | OBJECTIVE VARIABLE |
|---|---|---|
| 0.85 | REMAINING BUDGET IS PRESENT ∧ NUMBER OF CLICKS≥ 100 ∧ DAY OF WEEK=HOLIDAY | UP |
| 0.8 | REMAINING BUDGET IS PRESENT ∧ DAY OF WEEK= WEEKDAY | HOLD |
| 0.78 | REMAINING BUDGET IS NOT PRESENT ∧ TIME OF DAY= MORNING | DOWN |
| 0.67 | NUMBER OF CLICKS≥100 ∧ DAY OF WEEK=WEEKDAY | HOLD |
| 0.58 | REMAINING BUDGET IS PRESENT ∧ NUMBER OF CLICKS< 100 ∧ DAY OF WEEK=WEEKDAY | UP |
| 0.5 | REMAINING BUDGET IS PRESENT ∧ NUMBER OF CLICKS≥ 100 ∧ LAST EVENT=NEWS | HOLD |
| ... | | |

EP 3 702 977 A2

# FIG.4

143

| IMPORTANCE DEGREE | VARIABLE |
|---|---|
| 0.91 | REMAINING BUDGET |
| 0.78 | DAY OF WEEK |
| 0.65 | NUMBER OF CLICKS |
| ... | |
| 0.03 | TIME OF DAY |
| 0.02 | LAST EVENT |
| ... | |

FIG.5

OUTPUT

INPUT

# FIG.6

HYPOTHESIS: PERSON WHO IS MALE·HAVE LICENSE WILL PURCHASE
HIT RATE 60% (=60 PEOPLE OUT OF 100 PEOPLE HAVE PURCHASED)

HYPOTHESIS: PERSON WHO IS MALE·HAVE LICENSE·MARRIED WILL PURCHASE
HIT RATE 90% (=9 PEOPLE OUT OF 10 PEOPLE HAVE PURCHASED)

CUSTOMER A

| SEX | MALE |
| LI-CENSE | HAVE |
| MAR-RIAGE | NOT MAR-RIED |
| - | - |

CUSTOMER DATA OF 1000 PEOPLE

MALE

FEMALE

HAVE

NOT HAVE

...

MALE∧HAVE

MALE∧ NOT HAVE

MALE∧ MARRIED

MALE∧NOT MARRIED

...

MALE∧HAVE∧ MARRIED

MALE∧NOT HAVE ∧ MARRIED

MALE∧HAVE∧NOT MARRIED

MALE∧NOT HAVE ∧NOT MARRIED

...

...

HYPOTHESIS: PERSON WHO IS MALE·NOT HAVE LICENSE·NOT MARRIED WILL NOT PURCHASE
HIT RATE 90% (=18 PEOPLE OUT OF 20 PEOPLE HAVE NOT PURCHASED)

TENS OF MILLIONS, HUNDREDS OF MILLIONS OF KNOWLEDGE CHUNKS

# FIG.7

|       | $\overline{C}\overline{D}$ | $\overline{C}D$ | $CD$ | $C\overline{D}$ |
|-------|------|------|------|------|
| $\overline{A}\overline{B}$ |      |      |      | $N_1$ |
| $\overline{A}B$ | $P_1$ |      | $P_2$ |      |
| $AB$  |      | $P_4$ | $N_3$ |      |
| $A\overline{B}$ |      | $P_3$ |      | $N_2$ |

# FIG.8

EP 3 702 977 A2

# FIG.9

EP 3 702 977 A2

# FIG.10

EP 3 702 977 A2

# FIG.11

EP 3 702 977 A2

# FIG.12

$$p = \frac{1}{1+e^{-z}}$$

$$z = \alpha + \beta_1\bar{C} - \beta_2 C\bar{D} - \beta_3 \bar{B}\bar{D} + \beta_4 \bar{B}D - \beta_5 \bar{B}C + \beta_6 B\bar{D} + \beta_7 \bar{A}D + \beta_8 \bar{A}B - \beta_9 \bar{A}\bar{B} - \beta_{10} A\bar{D} - \beta_{11} AC$$

H1  H2  H3  H4  H5  H6  H7  H8  H9  H10  H11

| | $\bar{C}$ | $C\bar{D}$ | $\bar{B}\bar{D}$ | $\bar{B}D$ | $\bar{B}C$ | $B\bar{D}$ | $\bar{A}D$ | $\bar{A}B$ | $\bar{A}\bar{B}$ | $A\bar{D}$ | $AC$ |
|---|---|---|---|---|---|---|---|---|---|---|---|
| | + | - | - | + | - | + | + | + | - | - | - |
| $N_1$ | 0 | 1 | 1 | 0 | 1 | 0 | 0 | 0 | 1 | 0 | 0 |
| $P_1$ | 1 | 0 | 0 | 0 | 0 | 1 | 0 | 1 | 0 | 0 | 0 |
| $P_2$ | 0 | 0 | 0 | 0 | 0 | 0 | 1 | 1 | 0 | 0 | 0 |
| $P_3$ | 1 | 0 | 0 | 1 | 0 | 0 | 0 | 0 | 0 | 0 | 0 |
| $N_2$ | 0 | 1 | 1 | 0 | 1 | 0 | 0 | 0 | 0 | 1 | 1 |
| $P_4$ | 1 | 0 | 0 | 0 | 0 | 0 | 0 | 0 | 0 | 0 | 0 |
| $N_3$ | 0 | 0 | 0 | 0 | 0 | 0 | 0 | 0 | 0 | 0 | 1 |

EP 3 702 977 A2

# FIG.13

START

S11

ENUMERATE COMBINATIONS OF OBJECTIVE VARIABLE AND CONDITIONS FOR PREDETERMINED NUMBER OF EXPLANATORY VARIABLES, AND GENERATE HYPOTHESES

S12

CALCULATE IMPORTANCE DEGREE OF EACH OF HYPOTHESES

S13

DISPLAY LIST OF HYPOTHESES AND IMPORTANCE DEGREES, AND HIGHLIGHT CONDITION FOR VARIABLE OF WHICH IMPORTANCE DEGREE ALONE IS LESS THAN OR EQUAL TO PREDETERMINED VALUE

END

# FIG.14

10

## EXTRACTION APPARATUS

### 11
COMMUNICATION UNIT

### 12
INPUT UNIT

### 13
OUTPUT UNIT

### 15
CONTROL UNIT

#### 151
GENERATION UNIT

#### 152
CALCULATION UNIT

#### 153
EXTRACTION UNIT

#### 154
UPDATING UNIT

### 14
STORAGE UNIT

#### 141
LOG DATA

#### 142
INFORMATION ON HYPOTHESIS

#### 143
INFORMATION ON VARIABLE

#### 144
INFORMATION ON GROUP

# FIG.15

141

| USER ID | SEX | AGE | NUMBER OF ACCESSES | AD DISTRIBUTION TIME OF DAY | DOMICILE | ... | CV |
|---|---|---|---|---|---|---|---|
| U001 | FEMALE | YOUNG | 10 TIMES | MORNING | METROPOLITAN | ... | NOT OCCUR |
| U002 | MALE | MIDDLE | 20 TIMES | AFTERNOON | HOKKAIDO | ... | OCCUR |
| U003 | FEMALE | ELDERLY | 5 TIMES | NIGHT | TOKAI | ... | OCCUR |
| ... | ... | ... | ... | ... | ... | ... | ... |

# FIG.16

142

| IMPORTANCE DEGREE | CONDITION FOR EXPLANATORY VARIABLE |
|---|---|
| 20 | SEX=MALE∧NUMBER OF ACCESSES≥20∧DOMICILE=HOKKAIDO |
| ... | ... |
| -40 | SEX=FEMALE∧AD DISTRIBUTION TIME OF DAY=MORNING∧DOMICILE=HOKKAIDO |
| ... | ... |

# FIG.17

144

| GROUP ID | CLASSIFICATION CONDITION |
|----------|--------------------------|
| G001 | SEX=FEMALE ∧ DOMICILE=HOKKAIDO |
| G002 | SEX=MALE ∧ DOMICILE=HOKKAIDO |
| ... | ... |
| G008 | DOMICILE=METROPOLITAN ∧ AGE=YOUNG |

# FIG.18

| G001: SEX=FEMALE ∧ DOMICILE=HOKKAIDO | | | | | | |
|---|---|---|---|---|---|---|
| IMPORTANCE DEGREE | SEX | AGE | NUMBER OF ACCESSES | AD DISTRIBUTION TIME OF DAY | DOMICILE | ... |
| -10 | FEMALE | MIDDLE | ONCE OR MORE | AFTERNOON | HOKKAIDO | ... |
| ... | | | | | | |
| G002: SEX=MALE ∧ DOMICILE=HOKKAIDO | | | | | | |
| IMPORTANCE DEGREE | SEX | AGE | NUMBER OF ACCESSES | AD DISTRIBUTION TIME OF DAY | DOMICILE | ... |
| 20 | MALE | MIDDLE | 20 TIMES OR MORE | AFTERNOON | HOKKAIDO | ... |
| 20 | MALE | YOUNG | 30 TIMES OR MORE | AFTERNOON | HOKKAIDO | ... |
| ... | | | | | | |
| G008: DOMICILE=METROPOLITAN ∧ AGE=YOUNG | | | | | | |
| IMPORTANCE DEGREE | SEX | AGE | NUMBER OF ACCESSES | AD DISTRIBUTION TIME OF DAY | DOMICILE | ... |
| -40 | FEMALE | YOUNG | 10 TIMES OR LESS | MORNING | METROPOLITAN | ... |
| ... | | | | | | |

# FIG.19

START

S21
ENUMERATE COMBINATIONS OF OBJECTIVE VARIABLE AND CONDITIONS FOR PREDETERMINED NUMBER OF EXPLANATORY VARIABLES, AND GENERATE HYPOTHESES

S22
CALCULATE IMPORTANCE DEGREE OF EACH OF HYPOTHESES

S23
CLASSIFY HYPOTHESES INTO GROUPS AND DISPLAY LIST

END

# FIG.20

START ACQUISITION OF AD PLACEMENT LOG

CHANGE BUDGET ALLOCATION

FIRST CYCLE

SECOND CYCLE

x-TH CYCLE

REMAINING BUDGET: ONE MILLION YEN

USER GROUP 1

USER GROUP 1

...

BUDGET: 500 THOUSAND YEN

BUDGET: 100 THOUSAND YEN

ALLOCATE BUDGET ACCORDING TO CV POSSIBILITY OF USER GROUP (ALLOCATE MORE BUDGET TO GROUP WITH HIGH POSSIBILITY TO INCREASE CV COUNT)

EP 3 702 977 A2

# FIG.21

# FIG.22

# FIG.23

EP 3 702 977 A2

# FIG.24

GROUP 1

CV PREDICTION MODEL

GROUP 1

PREDICTION IS CV, SCORE 40

PREDICTION IS not CV SCORE -50

PREDICTION IS not CV SCORE -80

GROUP SCORE AVERAGE: 40 RANKING 2

EP 3 702 977 A2

# FIG.25

| BUDGET ALLOCATION: 220 THOUSAND YEN | BUDGET ALLOCATION: 660 THOUSAND YEN | BUDGET ALLOCATION: 70 THOUSAND YEN | BUDGET ALLOCATION: 20 THOUSAND YEN |
|---|---|---|---|
| GROUP 1 | GROUP 2 | GROUP 3 | GROUP 4 |
| GROUP SCORE AVERAGE: 40 RANKING 2 | GROUP SCORE AVERAGE: 70 RANKING 1 | GROUP SCORE AVERAGE: -20 RANKING 3 | GROUP SCORE AVERAGE: -50 RANKING 4 |

# FIG.26

START

LEARN CV PREDICTION MODEL BY USING PART OF DATA AS LEARNING DATA ~S51

CLASSIFY TEST DATA THAT IS DATA OBTAINED BY EXCLUDING LEARNING DATA OUT OF DATA INTO GROUP ~S52

INPUT TEST DATA INTO CV PREDICTION MODEL FOR EACH OF GROUPS, AND PREDICT CV SCORE ~S53

CALCULATE BUDGET TO BE ALLOCATED BASED ON RANKING OF CV SCORE OF GROUP ~S54

END

# FIG.27

EXTRACTION APPARATUS

PROCESSOR ⌇10d

MEMORY ⌇10c

COMMUNICATION INTERFACE ⌇10a

HDD ⌇10b

⌇10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015028732 A